# EUROPÄISCHE PATENTSCHRIFT

(11) **EP 4 434 605 B1**
(45) Veröffentlichungstag und Bekanntmachung des Hinweises auf die Patenterteilung: **08.04.2026**
(21) Anmeldenummer: 24020082.4
(22) Anmeldetag: 15.03.2024
(51) Int. Cl.: B01D 39/20, B01D 39/16, B01D 46/42, B01D 46/10, B01D 46/00

(54) **LUFTFILTEREINHEIT, INSBESONDERE SCHWEBSTOFFFILTEREINHEIT UND VERFAHREN ZU DEREN HERSTELLUNG**
AIR FILTER UNIT, IN PARTICULAR PARTICULATE FILTER UNIT, AND METHOD FOR PRODUCING SAME
UNITÉ DE FILTRE À AIR, EN PARTICULIER UNITÉ DE FILTRE À PARTICULES ET SON PROCÉDÉ DE FABRICATION

(30) Priorität: 18.03.2023 DE 102023001247
(43) Veröffentlichungstag der Anmeldung: 25.09.2024
(73) Patentinhaber: Apodis GmbH, 73084 Salach (DE)
(72) Erfinder: Riljic, Dejan, 73079 Süßen (DE); Riljic, Oliver, 73079 Süßen (DE)

(56) Entgegenhaltungen:
- CN-A- 107 519 695
- DE-A1- 102015 105 059
- JP-A- 2021 171 621
- US-A1- 2017 368 488
- US-A1- 2019 107 302
- US-A1- 2020 376 152
- US-A1- 2022 065 494

## Beschreibung

Die vorliegende Erfindung betrifft eine Luftfiltereinheit, insbesondere Schwebstofffiltereinheit, mit einem Filterkörper zur Abscheidung von Substanzen aus der Luft und einem den Filterkörper einfassenden Filterrahmen, sowie eine Luftfilteranlage mit einem Lüftungsrohr und einer zuvor genannten Luftfiltereinheit. Die vorliegende Erfindung betrifft ferner ein Verfahren zur Herstellung einer zuvor genannten Luftfiltereinheit sowie die Verwendung einer Schichtanordnung für einen Filterrahmen einer Luftfiltereinheit, insbesondere Schwebstofffiltereinheit.

### Stand der Technik

Bekannt sind Schwebstofffilter mit einem Filterkörper, welcher von einem Filterrahmen umfasst ist. Der Filterkörper ist je nach Anforderung antimikrobiell ausgebildet. Der Filterrahmen besteht in der Regel aus MDF, einem Metall, bspw. Aluminium, oder einem Kunststoff, bspw. Polypropylen. Schwebstofffilter mit derartigen Rahmen sind jedoch relativ schwer. Ferner besteht bei MDF-Rahmen die Gefahr eines Aufquellens bei Kontakt mit Emulsionen, während Aluminiumrahmen teuer und aufwendiger in der Fertigung sind.

Bekannt sind ferner Formstücke aus einer "Sandwich-Konstruktion" mit einem Polyurethan-Hartschaum im Kern und einer beidseitigen Aluminiumkaschierung, welche an den Außenseiten eine antimikrobielle Beschichtung aufweisen. Derartige Formstücke werden zur Herstellung von Lüftungskanälen eingesetzt.

Die DE 10 2012 007 625 A1 offenbart eine Filtereinrichtung mit einem Filterkörper und einem den Filterkörper einfassenden Filterrahmen, wobei der Randbereich des Filterkörpers über ein ausgehärtetes Verbindungsmedium mit dem Filterrahmen verbunden ist.

Die DE 10 2020 007 515 A1 offenbart eine Raumluftreinigerplattform mit antiviralen und antibakteriellen Hochleistungsfiltern.

Die US 2017/0368488 A1 und die US 2022/0065494 A1 offenbaren einen Filter mit einem Filterrahmen.

Die Aufgabe der vorliegenden Erfindung besteht daher darin, einen Luftfilter bereitzustellen, welcher einfach herstellbar ist sowie ein geringes Gewicht mit einer guten Widerstandsfähigkeit aufweist.

### Beschreibung der Erfindung

Vor diesem Hintergrund wird mit dem hier vorgestellten Ansatz eine Luftfiltereinheit, insbesondere Schwebstofffiltereinheit vorgestellt, mit
- einem Filterkörper zur Abscheidung von Substanzen aus der Luft und
- einem den Filterkörper einfassenden Filterrahmen,
wobei der Filterrahmen eine Schichtanordnung mit einer Hartschaumschicht und zumindest einer flexiblen Außenschicht an einer Außenseite des Filterrahmens aufweist, wobei die Außenschicht Aluminium aufweist oder aus Aluminium besteht.

Ferner wird eine Luftfilteranlage mit einem Lüftungsrohr und einer Luftfiltereinheit der zuvor genannten Art vorgestellt, welche in dem Lüftungsrohr zur Abscheidung von Substanzen aus der durchströmenden Luft angeordnet ist.

Des Weiteren wird ein Verfahren zur Herstellung einer Luftfiltereinheit, insbesondere der zuvor genannten Art vorgestellt, mit den Schritten:
- Bereitstellen einer, insbesondere plattenförmigen Schichtanordnung mit einer Hartschaumschicht und zumindest einer flexiblen Außenschicht, welche Aluminium aufweist oder aus Aluminium besteht, an einer Außenseite der Schichtanordnung;
- Schneiden von zumindest zwei, insbesondere drei V-förmigen Nuten in die Schichtanordnung, um zumindest drei, insbesondere vier Schichtabschnitte zu erhalten, welche mittels der flexiblen Außenschicht miteinander verbunden sind/bleiben;
- Schneiden von Schrägen an zwei gegenüberliegenden Schichtenden der Schichtanordnung;
- Auftragen eines Klebstoffes auf eine Innenseite der Schichtanordnung; und
- Anordnen eines Filterkörpers zur Abscheidung von Substanzen aus der Luft auf einen der Schichtabschnitte und Verbinden der zwei gegenüberliegenden Schichtenden durch Knicken der Schichtanordnung an den V-förmigen Nuten, um einen Filterrahmen auszubilden, der den Filterkörper einfasst und damit die Luftfiltereinheit zu erhalten; oder Verbinden der zwei gegenüberliegenden Schichtenden durch Knicken der Schichtanordnung an den V-förmigen Nuten, um einen Filterrahmen auszubilden, und Anordnen eines Filterkörpers zur Abscheidung von Substanzen aus der Luft in dem Filterrahmen derart, dass der Filterrahmen der Filterkörper einfasst, um die Luftfiltereinheit zu erhalten.

Schließlich betrifft die vorliegende Erfindung eine Verwendung einer Schichtanordnung mit einer Hartschaumschicht und zumindest einer flexiblen Außenschicht, welche Aluminium aufweist oder aus Aluminium besteht, an einer Außenseite der Schichtanordnung für einen Filterrahmen einer Luftfiltereinheit, insbesondere Schwebstofffiltereinheit.

Die vorliegende Erfindung stellt eine Luftfiltereinheit bereit, welche aufgrund der erfindungsgemäßen Schichtanordnung leicht und widerstandsfähig bzw. robust sowie einfach herstellbar ist. Dies wird zum einen dadurch erzielt, dass die Schichtanordnung eine leicht zu bearbeitende bzw. verarbeitende Hartschaumschicht aufweist, ein Filterrahmen mit einerseits einer ausreichenden Stabilität und andererseits einem reduzierten Gewicht realisiert werden kann. Die flexible Außenschicht wiederum stellt einen mechanischen Schutz des Filterrahmens bereit und verhindert das Eindringen von Fluiden in diesen. Die flexible Außenschicht ermöglicht ferner eine einfache Reinigung des Filterrahmens.

Die Luftfiltereinheit ist bevorzugt für den Einsatz oder Einbau in Luftfilteranlagen und Luftreinigungsanlagen ausgebildet bzw. eingerichtet.

Die Luftfiltereinheit ist bevorzugt als Schwebstofffiltereinheit, bspw. EPA-, HEPA- oder ULPA-Schwebstofffiltereinheit, ausgebildet. Hierfür weist die Luftfiltereinheit einen Filterkörper zur Abscheidung von Substanzen, insbesondere Schwebstoffen aus der Luft auf. Der Filterkörper kann bspw. ein Filtergewebe und/oder ein Filtervlies und/oder eine Filtermatte aufweisen oder daraus bestehen. Der Filterkörper kann eine antimikrobielle Beschichtung aufweisen.

Die Luftfiltereinheit weist ferner einen Filterrahmen auf, in dem der Filterkörper eingefasst ist. Der Filterrahmen ist bevorzugt rechteckig, insbesondere quadratisch ausgebildet. Der Filterrahmen kann jedoch eine beliebige geeignete bzw. technisch sinnvolle Form aufweisen, ohne den Rahmen der vorliegenden Erfindung zu verlassen.

Erfindungsgemäß weist der Filterrahmen eine Schichtanordnung mit einer Hartschaumschicht und zumindest einer flexiblen Außenschicht an einer Außenseite des Filterrahmens bzw. der Schichtanordnung auf. Das heißt, mit anderen Worten, dass die Rahmenwand des Filterrahmens, insbesondere umfänglich eine Schichtanordnung mit einer Hartschaumschicht und zumindest einer flexiblen Außenschicht an einer Außenseite des Filterrahmens aufweist. Demnach stellt die Schichtanordnung die Rahmenwand des Filterrahmens dar.

Die Schichtanordnung ist druckstabil ausgebildet. Die Schichtanordnung kann hierbei eine Dicke von größer oder gleich 5mm bis kleiner oder gleich 50mm aufweisen.

Die Hartschaumschicht ist druckstabil ausgebildet. Die Hartschaumschicht weist bevorzugt einen Kunststoff, insbesondere Polyurethan auf oder besteht bevorzugt aus einem Kunststoff, insbesondere Polyurethan. Die Hartschaumschicht kann jedoch auch Polystyrol oder Polyvinylchlorid oder einen beliebigen dem Fachmann bekannten geeigneten Kunststoff aufweisen oder daraus bestehen. Polyurethan, aber auch Polystyrol oder Polyvinylchlorid, sind sehr gut geeignet, da die jeweiligen Hartschaumschichten vorteilhafterweise leicht, druckstabil, wärmedämmend und schalldämmend ausgebildet sind.

Die Außenschicht ist bevorzugt an der Hartschaumschicht angeordnet. Hierbei ist die Außenschicht weiter bevorzugt unmittelbar an der Hartschaumschicht angeordnet.

Bevorzugt ist die Außenschicht als Kaschierung ausgebildet. Das heißt, mit anderen Worten, dass die Außenschicht mittels Kaschierung mit der Hartschaumschicht verbunden wurde.

Bevorzugt ist die Außenschicht wasserundurchlässig ausgebildet.

Bevorzugt weist die Außenschicht eine antimikrobielle und/oder antibakterielle und/oder antivirale Beschichtung, insbesondere Silberionenbeschichtung auf.

Demnach ist die Außenschicht bevorzugt als eine antimikrobiell beschichtete Aluminiumschicht ausgebildet.

In einer bevorzugten Ausführungsform ist die Außenschicht einteilig ausgebildet und umschließt den Filterrahmen an der Außenseite umfänglich. Das heißt, mit anderen Worten, dass die Außenschicht sich in Umfangsrichtung des Filterrahmens um den Filterrahmen erstreckt, wobei sie einteilig, d.h. einstückig ausgebildet ist. Durch diese Ausgestaltung wird die Dichtwirkung der Außenschicht erhöht, da diese - wenn überhaupt - nur an einer Verbindungsstelle abgedichtet werden muss. Zum anderen wird hierdurch die Herstellung des Filterrahmens und damit der gesamten Filtereinheit erheblich erleichtert, da der Filterrahmen an einem Stück bearbeitet, insbesondere mit einem Klebstoff versehen und anschließend geknickt oder gebogen werden kann.

In einer bevorzugten Ausführungsform weist die Schichtanordnung ferner eine Innenschicht an einer Innenseite des Filterrahmens auf. Die Innenschicht ist hierbei bevorzugt flexibel ausgebildet.

Analog zur Außenschicht ist die Innenschicht bevorzugt an der Hartschaumschicht angeordnet. Hierbei ist die Innenschicht weiter bevorzugt unmittelbar an der Hartschaumschicht angeordnet.

Bevorzugt sind die Außenschicht und die Innenschicht, insbesondere unmittelbar an gegenüberliegenden Seiten der Hartschaumschicht angeordnet, um eine Sandwichstruktur auszubilden. Das heißt, mit anderen Worten, dass die Schichtanordnung bevorzugt als Sandwichstruktur ausgebildet ist, welche die Hartschaumschicht als Kern und die Außenschicht und die Innenschicht als Deckschichten aufweist.

Bevorzugt ist die Innenschicht als Kaschierung ausgebildet. Das heißt, mit anderen Worten, dass die Innenschicht mittels Kaschierung mit der Hartschaumschicht verbunden wurde.

Bevorzugt ist die Innenschicht wasserundurchlässig ausgebildet.

Bevorzugt weist die Innenschicht Aluminium auf oder besteht die Innenschicht aus Aluminium.

Bevorzugt weist die Innenschicht eine antimikrobielle und/oder antibakterielle und/oder antivirale Beschichtung, insbesondere Silberionenbeschichtung auf. Durch diese Maßnahme kann die Filterwirkung der Filtereinheit gegenüber Mikroben weiter gesteigert werden, da die die durchströmende Luft ggf. auch an der Innenschicht vorbeiströmt.

Demnach ist die Innenschicht bevorzugt als eine antimikrobiell beschichtete Aluminiumschicht ausgebildet.

In einer bevorzugten Ausführungsform weist die Luftfiltereinheit einen Stirnrahmen auf, welcher an einer Stirnseite des Filterrahmens angeordnet ist. Hierbei ist der Stirnrahmen bevorzugt L-, U- oder F-profilförmig ausgebildet. Alternativ weist die Luftfiltereinheit zwei Stirnrahmen auf, welche an gegenüberliegenden Stirnseiten des Filterrahmens angeordnet sind. Hierbei sind die Stirnrahmen bevorzugt L- und/oder U- und/oder F-profilförmig ausgebildet. Bei dem Stirnrahmen handelt es sich um einen stirnseitig angeordneten Rahmen. Der Stirnrahmen verdeckt bevorzugt die gesamte Stirnseite des Filterrahmens. Im Falle eines L-Profils ist ein Profilschenkel bevorzugt auf der Innenseite des Filterrahmens angeordnet. Im Falle eines U-Profils ist der Stirnrahmen bevorzugt auf den Filterrahmen eingeschoben angeordnet, sodass der Filterrahmen in dem U-Profil angeordnet ist. Im Falle eines F-Profils gilt Selbiges wie beim U-Profil, wobei der zusätzliche Schenkel außen angeordnet ist, um einen Anschlag für die Luftfiltereinheit bereitzustellen. Der Stirnrahmen kann Aluminium aufweisen oder daraus bestehen.

Der Stirnrahmen bietet je nach Ausführungsform eine Vielzahl von Vorteilen. Zunächst bietet er einen stirnseitigen mechanischen Schutz der Hartschaumschicht und damit des Filterrahmens. Außerdem kann der Stirnrahmen einen inneren Anschlag für ein Griffschutzelement und/oder den Filterkörper bereitstellen. Da die Luftfiltereinheit in bspw. einem Lüftungsrohr auf der Einströmseite abgedichtet werden muss, was in der Regel durch Anpressen gegen eine Gummidichtung erfolgt, kann der Stirnrahmen ferner auf der gegenüberliegenden Stirnseite als Verspannungsfläche für die Schrauben dienen. Des Weiteren kann der Stirnrahmen als Befestigungsfläche für bspw. einen Tragegriff dienen.

In einer bevorzugten Ausführungsform weist die Luftfiltereinheit zumindest einen Tragegriff auf, welcher an dem Stirnrahmen oder den zwei Stirnrahmen befestigt ist.

In einer bevorzugten Ausführungsform weist die Luftfiltereinheit zumindest einen RFID-Chip auf, welcher an/in dem Filterrahmen, insbesondere an/in der Schichtanordnung angeordnet ist. Auf dem RFID-Chip können bspw. Informationen über die Luftfiltereinheit, insbesondere den Filterkörper und/oder den Filterrahmen gespeichert sein.

Erfindungsgemäß wird zur Herstellung der Luftfiltereinheit zunächst eine Schichtanordnung mit einer Hartschaumschicht und zumindest einer flexiblen Außenschicht an einer Außenseite der Schichtanordnung bereitgestellt. Hierbei ist die Schichtanordnung bevorzugt plattenförmig bzw. als Platte/Paneel ausgebildet. Die Schichtanordnung ist druckstabil ausgebildet. Die Außenseite kann während der Bearbeitung insbesondere eine Unterseite der Schichtanordnung sein.

Je nach geplanter Ausgestaltung bzw. Form des Filterrahmens werden dann zumindest zwei V-förmige Nuten in die Schichtanordnung geschnitten bzw. gefräst, um zumindest drei Schichtabschnitte zu erhalten, welche mittels der flexiblen Außenschicht miteinander verbunden sind bzw. bleiben. Der Winkel und der Abstand der V-förmigen Nuten hängt hierbei ebenfalls von der geplanten Ausgestaltung bzw. Form des Filterrahmens ab. Im Falle eines rechteckigen Filterrahmens würden drei V-förmige Nuten mit einem Winkel von 90° in die Schichtanordnung geschnitten bzw. gefräst werden, um vier Schichtabschnitte zu erhalten. Im Falle eines quadratischen Filterrahmens wären die V-förmige Nuten äquidistant angeordnet.

Je nach geplanter Ausgestaltung bzw. Form des Filterrahmens werden außerdem entsprechend geformte Schrägen an zwei gegenüberliegenden Schichtenden der

Schichtanordnung geschnitten bzw. gefräst. Im Falle eines rechteckigen oder quadratischen Filterrahmens würden die Schrägen einen Winkel von 45° aufweisen.

Außerdem wird ein Klebstoff, insbesondere Leim auf einer der Außenseite gegenüberliegenden Innenseite der Schichtanordnung aufgetragen. Bei der Innenseite handelt es sich um die mit den V-förmigen Nuten versehene Seite der Schichtanordnung. Die Innenseite kann während der Bearbeitung insbesondere eine Oberseite der Schichtanordnung sein.

In einer ersten Alternative werden ein Filterkörper zur Abscheidung von Substanzen aus der Luft auf einen der Schichtabschnitte angeordnet und anschließend die zwei gegenüberliegenden Schichtenden durch Knicken der Schichtanordnung an den V-förmigen Nuten verbunden, um einen Filterrahmen auszubilden, der den Filterkörper einfasst und damit die Luftfiltereinheit zu erhalten.

Alternativ werden in einer zweiten Alternative die zwei gegenüberliegenden Schichtenden durch Knicken der Schichtanordnung an den V-förmigen Nuten verbunden, um einen Filterrahmen auszubilden, und anschließend ein Filterkörper zur Abscheidung von Substanzen aus der Luft in dem Filterrahmen derart angeordnet, dass der Filterrahmen der Filterkörper einfasst, um die Luftfiltereinheit zu erhalten.

In einer bevorzugten Ausführungsform der ersten Alternative werden nach dem Schritt des Verbindens der zwei gegenüberliegenden Schichtenden ein Griffschutzelement in den Filterrahmen angrenzend an den Filterkörper angeordnet und anschließend ein, insbesondere L-, U- oder F-profilförmiger Stirnrahmen an einer Stirnseite des Filterrahmens angrenzend an das Griffschutzelement angeordnet.

In einer bevorzugten Ausführungsform der zweiten Alternative werden vor dem Schritt des Anordnens des Filterkörpers ein, insbesondere L-, U- oder F-profilförmiger Stirnrahmen an einer Stirnseite des ausgebildeten Filterrahmens angeordnet und ein Griffschutzelement in den Filterrahmen angrenzend an den Stirnrahmen angeordnet, wobei der Filterkörper anschließend angrenzend an das Griffschutzelement angeordnet wird.

Bei beiden Alternativen können anschließend auf der gegenüberliegenden Seite ein weiteres Gitterschutzelement in den Filterrahmen angrenzend an den Filterkörper sowie ein weiterer, insbesondere L-, U- oder F-profilförmiger Stirnrahmen angrenzend an das weitere Gitterschutzelement angeordnet werden.

### Zeichnungen

Die Erfindung wird nachstehend anhand der beigefügten Zeichnungen beispielhaft näher erläutert. Es zeigen:
- Figur 1: eine perspektivische Darstellung einer erfindungsgemäßen Luftfiltereinheit;
- Figur 2: eine Schnittdarstellung A-A der Luftfiltereinheit aus Fig. 1;
- Figur 3: einen Zwischenschritt zur Herstellung einer Luftfiltereinheit; und
- Figur 4: ein Ablaufdiagramm eines erfindungsgemäßen Verfahrens zur Herstellung einer Luftfiltereinheit.

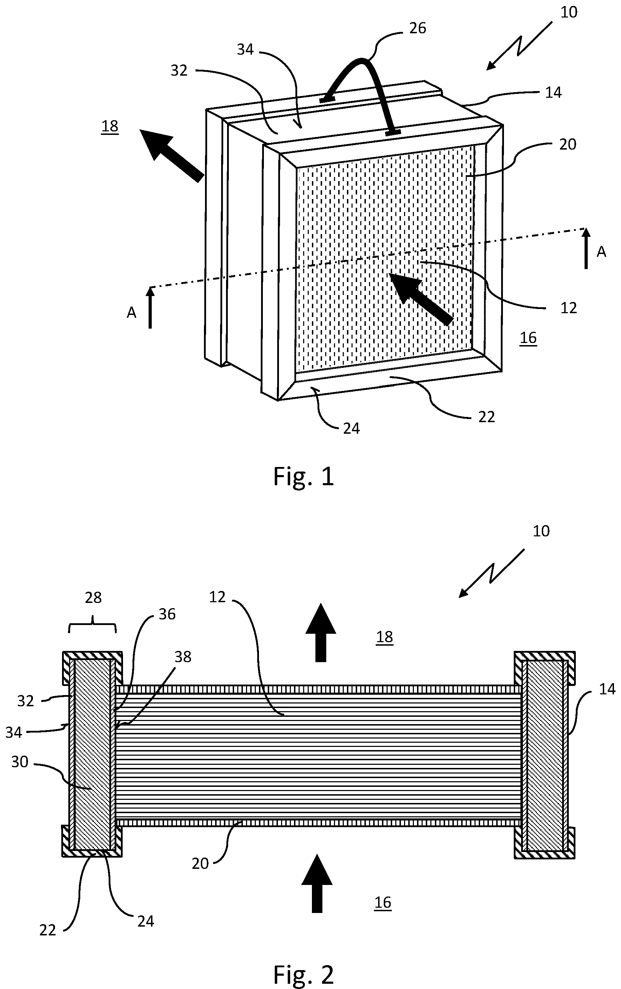

Fig. 1 zeigt eine perspektivische Darstellung einer erfindungsgemäßen Luftfiltereinheit, welcher in ihrer Gesamtheit mit der Bezugsziffer 10 versehen ist. Die Luftfiltereinheit 10 ist hierbei als HEPA-Schwebstofffiltereinheit 10 ausgebildet.

Die Luftfiltereinheit 10 weist einem Filterkörper 12 bzw. einen HEPA-Filterkörper 12 zur Abscheidung von Schwebstoffen aus der Luft und einen den Filterkörper 12 einfassenden Filterrahmen 14 auf. Der Filterkörper 12 und der Filterrahmen 14 sind rechteckig bzw. quadratförmig ausgebildet.

Die Luftfiltereinheit 10 weist ferner an einer Lufteinlassseite 16 und an einer Luftauslassseite 18 jeweils ein Griffschutzelemente 20 auf.

Die Luftfiltereinheit 10 weist außerdem zwei U-profilförmige Stirnrahmen 22 auf, welche an gegenüberliegenden Stirnseiten 24 des Filterrahmens 14 angeordnet sind. Hierbei sind die Stirnrahmen 22 auf den Filterrahmen 14 eingeschoben angeordnet, sodass der Filterrahmen 14 in dem U-Profil angeordnet ist.

Die Luftfiltereinheit 10 weist des Weiteren einen Tragegriff 26 auf, welcher an den zwei Stirnrahmen 22 befestigt ist.

Erfindungsgemäß weist der Filterrahmen 14 eine Schichtanordnung 28 auf, welche in der Schnittdarstellung A-A von Fig. 2 detailliert gezeigt ist. Die Schichtanordnung 28 weist eine Hartschaumschicht 30, eine flexible Außenschicht 32 an einer Außenseite 34 des Filterrahmens 14 und eine flexible Innenschicht 36 an einer Innenseite 38 des Filterrahmens 14 auf.

Die Hartschaumschicht 30 besteht aus Polyurethan. Die Außenschicht 32 ist einteilig bzw. einstückig ausgebildet und umschließt den Filterrahmen 14 an der Außenseite 34 umfänglich.

Die Außenschicht 32 und die Innenschicht 36 sind an gegenüberliegenden Seiten der Hartschaumschicht 30 angeordnet und bilden dadurch eine Sandwichstruktur mit der Hartschaumschicht 30 als Kern und der Außenschicht 32 und der Innenschicht 36 als Deckschichten aus.

Die Außenschicht 32 und die Innenschicht 36 sind hierbei als Kaschierung ausgebildet. Die Außenschicht 32 und die Innenschicht 36 sind wasserundurchlässig ausgebildet. Die Außenschicht 32 und die Innenschicht 36 sind als Aluminiumschichten 32, 36 ausgebildet und weisen eine (nicht gezeigte) antimikrobielle Beschichtung bzw. Silberionenbeschichtung auf.

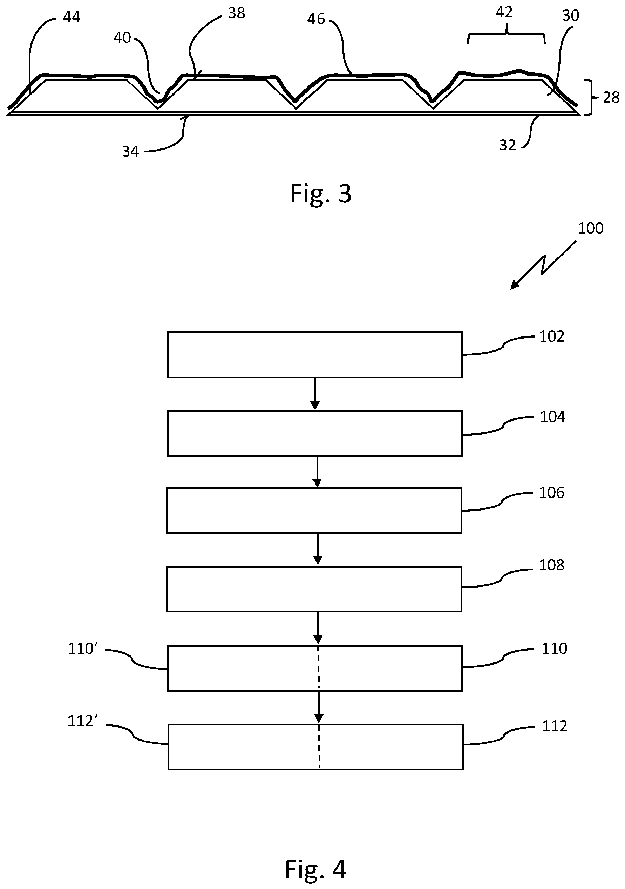

In Fig. 3 ist schematisch ein Zwischenschritt 108 zur Herstellung einer erfindungsgemäßen Luftfiltereinheit 10 gezeigt. Hierbei ist dargestellt, wie in eine bereitgestellte plattenförmige Schichtanordnung 28 mit einer Hartschaumschicht 30 und einer flexiblen Außenschicht 32 (Schritt 102) zum einen drei äquidistante V-förmige Nuten 40 mit einem Winkel von 90° geschnitten bzw. gefräst wurden, um vier Schichtabschnitte 42 zu erhalten, welche mittels der flexiblen Außenschicht 32 miteinander verbunden sind bzw. bleiben (Schritt 104). Zum anderen wurde an zwei gegenüberliegenden Schichtenden der Schichtanordnung 28 jeweils eine Schräge 44 mit einem Winkel von 45° geschnitten bzw. gefräst (Schritt 106). Anschließend wurde ein Klebstoffe 46 bzw. Leim 46 auf eine Innenseite 38, d.h. der Seite der Schichtanordnung 28 mit den V-förmigen Nuten 40, aufgebracht (Schritt 108).

Fig. 4 zeigt ein Verfahren 100 zur Herstellung einer Luftfiltereinheit 10. Das Verfahren 100 umfasst einen Schritt des Bereitstellens 102 einer, insbesondere plattenförmigen Schichtanordnung 28 mit einer Hartschaumschicht 30 und zumindest einer flexiblen Außenschicht 32 an einer Außenseite 32 der Schichtanordnung 28. Das Verfahren 100 umfasst ferner einen Schritt des Schneidens 104 von zumindest zwei, insbesondere drei V-förmigen Nuten 40 in die Schichtanordnung 28, um zumindest drei, insbesondere vier Schichtabschnitte 42 zu erhalten, welche mittels der flexiblen Außenschicht 32 miteinander verbunden sind/bleiben. Das Verfahren 100 umfasst außerdem einen Schritt des Schneidens 106 von Schrägen 44 an zwei gegenüberliegenden Schichtenden der Schichtanordnung 28. Das Verfahren 100 umfasst des Weiteren einen Schritt des Auftragens 108 eines Klebstoffes 46 auf eine Innenseite 38 der Schichtanordnung 28.

Das Verfahren 100 umfasst in einer ersten Alternative noch einen Schritt des Anordnens 110 eines Filterkörpers 12 zur Abscheidung von Substanzen aus der Luft auf einen der Schichtabschnitte 42 und einen Schritt des anschließenden Verbindens 112 der zwei gegenüberliegenden Schichtenden durch Knicken der Schichtanordnung 28 an den V-förmigen Nuten 40, um einen Filterrahmen 14 auszubilden, der den Filterkörper 12 einfasst und damit die Luftfiltereinheit 10 zu erhalten.

In einer zweiten Alternative umfasst das Verfahren 100 noch einen Schritt des Verbindens 110' der zwei gegenüberliegenden Schichtenden durch Knicken der Schichtanordnung 28 an den V-förmigen Nuten 40, um einen Filterrahmen 14 auszubilden, und einen Schritt des anschließenden Anordnens 112' eines Filterkörpers 12 zur Abscheidung von Substanzen aus der Luft in dem Filterrahmen 14 derart, dass der Filterrahmen 14 der Filterkörper 12 einfasst, um die Luftfiltereinheit 10 zu erhalten.

Umfasst ein Ausführungsbeispiel eine "und/oder"-Verknüpfung zwischen einem ersten Merkmal und einem zweiten Merkmal. So ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Luftfiltereinheit (10), insbesondere Schwebstofffiltereinheit (10), mit
- einem Filterkörper (12) zur Abscheidung von Schwebstoffen aus der Luft und
- einem den Filterkörper (12) einfassenden Filterrahmen (14),
**dadurch gekennzeichnet, dass**
der Filterrahmen (14) eine Schichtanordnung (28) mit einer Hartschaumschicht (30) und zumindest einer flexiblen Außenschicht (32) an einer Außenseite (32) des Filterrahmens (14) aufweist.

2. Luftfiltereinheit (10) nach Anspruch 1, **dadurch gekennzeichnet, dass** die Außenschicht (32) einteilig ausgebildet ist und den Filterrahmen (14) an der Außenseite (32) umfänglich umschließt.

3. Luftfiltereinheit (10) nach Anspruch 1 oder 2, **dadurch gekennzeichnet, dass** die Schichtanordnung (28) ferner eine, insbesondere flexible Innenschicht (36) an einer Innenseite (38) des Filterrahmens (14) aufweist.

4. Luftfiltereinheit (10) nach einem der vorhergehenden Ansprüche, **dadurch gekennzeichnet, dass**
- die Außenschicht (32), insbesondere unmittelbar an der Hartschaumschicht (30) angeordnet ist; oder
- die Innenschicht (36), insbesondere unmittelbar an Hartschaumschicht (30) angeordnet ist; oder
- die Außenschicht (32) und die Innenschicht (36), insbesondere unmittelbar an gegenüberliegenden Seiten der Hartschaumschicht (30) angeordnet sind, um eine Sandwichstruktur auszubilden.

5. Luftfiltereinheit (10) nach einem der vorhergehenden Ansprüche, **dadurch gekennzeichnet, dass** die Außenschicht (32) und/oder die Innenschicht (36) der Schichtanordnung (28) als Kaschierung ausgebildet ist/sind.

6. Luftfiltereinheit (10) nach einem der vorhergehenden Ansprüche, **dadurch gekennzeichnet, dass** die Außenschicht (32) und/oder die Innenschicht (36) der Schichtanordnung (28) wasserundurchlässig ausgebildet ist/sind.

7. Luftfiltereinheit (10) nach einem der vorhergehenden Ansprüche, **dadurch gekennzeichnet, dass** die Außenschicht (32) und/oder die Innenschicht (36) der Schichtanordnung (28) Aluminium aufweisen oder aus Aluminium bestehen.

8. Luftfiltereinheit (10) nach einem der vorhergehenden Ansprüche, **dadurch gekennzeichnet, dass** die Außenschicht (32) und/oder die Innenschicht (36) der Schichtanordnung (28) eine antimikrobielle und/oder antibakterielle und/oder antivirale Beschichtung, insbesondere Silberionenbeschichtung aufweist/aufweisen.

9. Luftfiltereinheit (10) nach einem der vorhergehenden Ansprüche, **dadurch gekennzeichnet, dass** die Hartschaumschicht (30) einen Kunststoff, insbesondere Polyurethan aufweist oder aus einem Kunststoff, insbesondere Polyurethan besteht.

10. Luftfiltereinheit (10) nach einem der vorhergehenden Ansprüche, **gekennzeichnet durch**
- einen, insbesondere L-, U- oder F-profilförmigen Stirnrahmen (22), welcher an einer Stirnseite (24) des Filterrahmens (14) angeordnet ist, oder
- zwei, insbesondere L- und/oder U- und/oder F-profilförmigen Stirnrahmen (22), welche an gegenüberliegenden Stirnseiten (24) des Filterrahmens (14) angeordnet sind.

11. Luftfiltereinheit (10) nach Anspruch 10, **gekennzeichnet durch** zumindest einen Tragegriff (26), welcher an dem Stirnrahmen (22) oder den zwei Stirnrahmen (22) befestigt ist.

12. Luftfiltereinheit (10) nach einem der vorhergehenden Ansprüche, **gekennzeichnet durch** zumindest einen RFID-Chip, welcher an/in dem Filterrahmen (14), insbesondere an/in der Schichtanordnung (28) angeordnet ist.

13. Luftfilteranlage mit einem Lüftungsrohr und einer Luftfiltereinheit (10) nach einem der vorhergehenden Ansprüche, welche in dem Lüftungsrohr zur Abscheidung von Substanzen aus der durchströmenden Luft angeordnet ist.

14. Verfahren (100) zur Herstellung einer Luftfiltereinheit (10), insbesondere nach einem der Ansprüche 1 bis 12, mit den Schritten:
- Bereitstellen (102) einer, insbesondere plattenförmigen Schichtanordnung (28) mit einer Hartschaumschicht (30) und zumindest einer flexiblen Außenschicht (32) an einer Außenseite (32) der Schichtanordnung (28);
- Schneiden (104) von zumindest zwei, insbesondere drei V-förmigen Nuten 40 in die Schichtanordnung (28), um zumindest drei, insbesondere vier Schichtabschnitte 42 zu erhalten, welche mittels der flexiblen Außenschicht (32) miteinander verbunden sind/bleiben;
- Schneiden (106) von Schrägen 44 an zwei gegenüberliegenden Schichtenden der Schichtanordnung (28);
- Auftragen (108) eines Klebstoffes 46 auf eine Innenseite (38) der Schichtanordnung (28); und
- Anordnen (110) eines Filterkörpers (12) zur Abscheidung von Substanzen aus der Luft auf einen der Schichtabschnitte 42 und anschließendes Verbinden (112) der zwei gegenüberliegenden Schichtenden durch Knicken der Schichtanordnung (28) an den V-förmigen Nuten 40, um einen Filterrahmen (14) auszubilden, der den Filterkörper (12) einfasst und damit die Luftfiltereinheit (10) zu erhalten; oder Verbinden (110') der zwei gegenüberliegenden Schichtenden durch Knicken der Schichtanordnung (28) an den V-förmigen Nuten 40, um einen Filterrahmen (14) auszubilden, und anschließendes Anordnen (112') eines Filterkörpers (12) zur Abscheidung von Substanzen aus der Luft in dem Filterrahmen (14) derart, dass der Filterrahmen (14) der Filterkörper (12) einfasst, um die Luftfiltereinheit (10) zu erhalten.

15. Verfahren (100) nach Anspruch 14, **dadurch gekennzeichnet, dass**
- nach dem Schritt des Verbindens (112) der zwei gegenüberliegenden Schichtenden ein Griffschutzelement (30) in den Filterrahmen (14) angrenzend an den Filterkörper (12) angeordnet wird und anschließend ein, insbesondere U- oder F-profilförmiger Stirnrahmen (22) an einer Stirnseite (24) des Filterrahmens (14) angrenzend an das Griffschutzelement (30) angeordnet wird; oder
- vor dem Schritt des Anordnens (112') des Filterkörpers (12) ein, insbesondere U- oder F-profilförmiger Stirnrahmen (22) an einer Stirnseite (24) des ausgebildeten Filterrahmens (14) angeordnet wird und ein Griffschutzelement (20) in den Filterrahmen (14) angrenzend an den Stirnrahmen (22) angeordnet wird, wobei der Filterkörper (12) anschließend angrenzend an das Griffschutzelement (20) angeordnet wird.

16. Verwendung einer Schichtanordnung (28) mit einer Hartschaumschicht (30) und zumindest einer flexiblen Außenschicht (32) an einer Außenseite (34) der Schichtanordnung (28) für einen Filterrahmen (14) einer Luftfiltereinheit (10), insbesondere Schwebstofffiltereinheit (10).

## Claims

1. Air filter unit (10), in particular a HEPA filter unit (10), comprising:
- a filter body (12) for separating suspended matter from the air; and
- a filter frame (14) enclosing the filter body (12);
**characterized in that**
the filter frame (14) comprises a layer arrangement (28) having a rigid foam layer (30) and at least one flexible outer layer (32) on an outer side (34) of the filter frame (14).

2. Air filter unit (10) according to claim 1, **characterized in that** the outer layer (32) is formed in one piece and circumferentially surrounds the filter frame (14) on the outer side (34).

3. Air filter unit (10) according to claim 1 or 2, **characterized in that** the layer arrangement (28) further comprises an in particular flexible inner layer (36) on an inner side (38) of the filter frame (14).

4. Air filter unit (10) according to any one of the preceding claims, **characterized in that:**
- the outer layer (32) is arranged in particular directly on the rigid foam layer (30); or
- the inner layer (36) is arranged in particular directly on the rigid foam layer (30); or
- the outer layer (32) and the inner layer (36) are arranged in particular directly on opposite sides of the rigid foam layer (30) to form a sandwich structure.

5. Air filter unit (10) according to any one of the preceding claims, **characterized in that** the outer layer (32) and/or the inner layer (36) of the layer arrangement (28) is/are designed as a lamination.

6. Air filter unit (10) according to any one of the preceding claims, **characterized in that** the outer layer (32) and/or the inner layer (36) of the layer arrangement (28) is/are designed to be water-impermeable.

7. Air filter unit (10) according to any one of the preceding claims, **characterized in that** the outer layer (32) and/or the inner layer (36) of the layer arrangement (28) comprise aluminum or consist of aluminum.

8. Air filter unit (10) according to any one of the preceding claims, **characterized in that** the outer layer (32) and/or the inner layer (36) of the layer arrangement (28) has/have an antimicrobial and/or antibacterial and/or antiviral coating, in particular a silver ion coating.

9. Air filter unit (10) according to any one of the preceding claims, **characterized in that** the rigid foam layer (30) comprises a plastic, in particular polyurethane, or consists of a plastic, in particular polyurethane.

10. Air filter unit (10) according to any one of the preceding claims, **characterized by:**
- one front frame (22), in particular L-, U-, or F-profiled, which is arranged on a front side (24) of the filter frame (14); or
- two front frames (22), in particular L- and/or U- and/or F-profiled, which are arranged on opposite front sides (24) of the filter frame (14).

11. Air filter unit (10) according to claim 10, **characterized by** at least one carrying handle (26) which is attached to the front frame (22) or the two front frames (22).

12. Air filter unit (10) according to any one of the preceding claims, **characterized by** at least one RFID chip which is arranged on/in the filter frame (14), in particular on/in the layer arrangement (28).

13. Air filter system comprising a ventilation pipe and an air filter unit (10) according to any one of the preceding claims, which is arranged in the ventilation pipe for separating substances from the air flowing through.

14. Method (100) for producing an air filter unit (10), in particular according to any one of claims 1 to 12, comprising the steps:
- providing (102) an in particular plate-shaped layer arrangement (28) having a rigid foam layer (30) and at least one flexible outer layer (32) on an outer side (34) of the layer arrangement (28);
- cutting (104) at least two, in particular three, V-shaped grooves (40) into the layer arrangement (28) to obtain at least three, in particular four, layer sections (42) which are/remain connected to each other by means of the flexible outer layer (32);
- cutting (106) bevels (44) at two opposite layer ends of the layer arrangement (28);
- applying (108) an adhesive (46) to an inner side (38) of the layer arrangement (28); and
- arranging (110) a filter body (12) for separating substances from the air on one of the layer sections (42) and subsequently connecting (112) the two opposite layer ends by folding the layer arrangement (28) at the V-shaped grooves (40) to form a filter frame (14) enclosing the filter body (12), thereby obtaining the air filter unit (10); or connecting (110') the two opposite layer ends by folding the layer arrangement (28) at the V-shaped grooves (40) to form a filter frame (14), and subsequently arranging (112') a filter body (12) for separating substances from the air in the filter frame (14) such that the filter frame (14) encloses the filter body (12), to obtain the air filter unit (10).

15. Method (100) according to claim 14, **characterized in that:**
- after the step of connecting (112) the two opposite layer ends, a handle protection element (20) is arranged in the filter frame (14) adjacent to the filter body (12), and subsequently an in particular U- or F-profiled front frame (22) is arranged on a front side (24) of the filter frame (14) adjacent to the handle protection element (20); or
- before the step of arranging (112') the filter body (12), an in particular U- or F-profiled front frame (22) is arranged on a front side (24) of the formed filter frame (14), and a handle protection element (20) is arranged in the filter frame (14) adjacent to the front frame (22), wherein the filter body (12) is subsequently arranged adjacent to the handle protection element (20).

16. Use of a layer arrangement (28) having a rigid foam layer (30) and at least one flexible outer layer (32) on an outer side (34) of the layer arrangement (28) for a filter frame (14) of an air filter unit (10), in particular a HEPA filter unit (10).

## Revendications

1. Unité de filtre à air (10), en particulier unité de filtre à particules (10), comprenant:
- un corps de filtre (12) pour la séparation de matières en suspension de l'air; et
- un cadre de filtre (14) entourant le corps de filtre (12);
**caractérisée en ce que**
le cadre de filtre (14) présente un agencement de couches (28) avec une couche de mousse rigide (30) et au moins une couche extérieure flexible (32) sur un côté extérieur (34) du cadre de filtre (14).

2. Unité de filtre à air (10) selon la revendication 1, **caractérisée en ce que** la couche extérieure (32) est réalisée d'un seul tenant et entoure de manière circonférentielle le cadre de filtre (14) sur le côté extérieur (34).

3. Unité de filtre à air (10) selon la revendication 1 ou 2, **caractérisée en ce que** l'agencement de couches (28) présente en outre une couche intérieure (36), en particulier flexible, sur un côté intérieur (38) du cadre de filtre (14).

4. Unité de filtre à air (10) selon l'une des revendications précédentes, **caractérisée en ce que:**
- la couche extérieure (32) est disposée en particulier directement sur la couche de mousse rigide (30); ou
- la couche intérieure (36) est disposée en particulier directement sur la couche de mousse rigide (30); ou
- la couche extérieure (32) et la couche intérieure (36) sont disposées en particulier directement sur des côtés opposés de la couche de mousse rigide (30) pour former une structure en sandwich.

5. Unité de filtre à air (10) selon l'une des revendications précédentes, **caractérisée en ce que** la couche extérieure (32) et/ou la couche intérieure (36) de l'agencement de couches (28) est/sont réalisée(s) sous forme de doublage (contrecollage).

6. Unité de filtre à air (10) selon l'une des revendications précédentes, **caractérisée en ce que** la couche extérieure (32) et/ou la couche intérieure (36) de l'agencement de couches (28) est/sont réalisée(s) de manière imperméable à l'eau.

7. Unité de filtre à air (10) selon l'une des revendications précédentes, **caractérisée en ce que** la couche extérieure (32) et/ou la couche intérieure (36) de l'agencement de couches (28) comprennent de l'aluminium ou sont constituées d'aluminium.

8. Unité de filtre à air (10) selon l'une des revendications précédentes, **caractérisée en ce que** la couche extérieure (32) et/ou la couche intérieure (36) de l'agencement de couches (28) présente(nt) un revêtement antimicrobien et/ou antibactérien et/ou antiviral, en particulier un revêtement d'ions d'argent.

9. Unité de filtre à air (10) selon l'une des revendications précédentes, **caractérisée en ce que** la couche de mousse rigide (30) comprend une matière plastique, en particulier du polyuréthane, ou est constituée d'une matière plastique, en particulier du polyuréthane.

10. Unité de filtre à air (10) selon l'une des revendications précédentes, **caractérisée par:**
- un cadre frontal (22), en particulier en forme de profilé en L, U ou F, qui est disposé sur un côté frontal (24) du cadre de filtre (14); ou
- deux cadres frontaux (22), en particulier en forme de profilé en L et/ou U et/ou F, qui sont disposés sur des côtés frontaux (24) opposés du cadre de filtre (14).

11. Unité de filtre à air (10) selon la revendication 10, **caractérisée par** au moins une poignée de transport (26) qui est fixée au cadre frontal (22) ou aux deux cadres frontaux (22).

12. Unité de filtre à air (10) selon l'une des revendications précédentes, **caractérisée par** au moins une puce RFID qui est disposée sur/dans le cadre de filtre (14), en particulier sur/dans l'agencement de couches (28).

13. Installation de filtrage d'air avec un tuyau de ventilation et une unité de filtre à air (10) selon l'une des revendications précédentes, laquelle est disposée dans le tuyau de ventilation pour la séparation de substances de l'air circulant.

14. Procédé (100) de fabrication d'une unité de filtre à air (10), en particulier selon l'une des revendications 1 à 12, comprenant les étapes suivantes:
- fournir (102) un agencement de couches (28), en particulier en forme de plaque, avec une couche de mousse rigide (30) et au moins une couche extérieure flexible (32) sur un côté extérieur (34) de l'agencement de couches (28);
- découper (104) au moins deux, en particulier trois rainures en V (40) dans l'agencement de couches (28) pour obtenir au moins trois, en particulier quatre sections de couche (42) qui sont/restent reliées entre elles au moyen de la couche extérieure flexible (32);
- découper (106) des biseaux (44) à deux extrémités de couche opposées de l'agencement de couches (28);
- appliquer (108) une colle (46) sur un côté intérieur (38) de l'agencement de couches (28); et
- disposer (110) un corps de filtre (12) pour la séparation de substances de l'air sur l'une des sections de couche (42) et relier ensuite (112) les deux extrémités de couche opposées par pliage de l'agencement de couches (28) au niveau des rainures en V (40) pour former un cadre de filtre (14) qui entoure le corps de filtre (12), et ainsi obtenir l'unité de filtre à air (10) ; ou relier (110') les deux extrémités de couche opposées par pliage de l'agencement de couches (28) au niveau des rainures en V (40) pour former un cadre de filtre (14), et disposer ensuite (112') un corps de filtre (12) pour la séparation de substances de l'air dans le cadre de filtre (14) de telle sorte que le cadre de filtre (14) entoure le corps de filtre (12) pour obtenir l'unité de filtre à air (10).

15. Procédé (100) selon la revendication 14, **caractérisé en ce que:**
- après l'étape de liaison (112) des deux extrémités de couche opposées, un élément de protection de poignée (20) est disposé dans le cadre de filtre (14) de manière adjacente au corps de filtre (12) et, ensuite, un cadre frontal (22), en particulier en forme de profilé en U ou F, est disposé sur un côté frontal (24) du cadre de filtre (14) de manière adjacente à l'élément de protection de poignée (20); ou
- avant l'étape de disposition (112') du corps de filtre (12), un cadre frontal (22), en particulier en forme de profilé en U ou F, est disposé sur un côté frontal (24) du cadre de filtre (14) formé, et un élément de protection de poignée (20) est disposé dans le cadre de filtre (14) de manière adjacente au cadre frontal (22), le corps de filtre (12) étant ensuite disposé de manière adjacente à l'élément de protection de poignée (20).

16. Utilisation d'un agencement de couches (28) avec une couche de mousse rigide (30) et au moins une couche extérieure flexible (32) sur un côté extérieur (34) de l'agencement de couches (28) pour un cadre de filtre (14) d'une unité de filtre à air (10), en particulier une unité de filtre à particules (10).
